# EUROPEAN PATENT SPECIFICATION

(11) **EP 3 827 055 B1**
(45) Date of publication and mention of the grant of the patent: **19.06.2024**
(21) Application number: 19841726.3
(22) Date of filing: 23.07.2019
(51) Int. Cl.: C09D 5/18, C09D 201/00, C09D 7/40, C08K 5/17, C08K 5/3492

(54) **FLEXIBLE TRANSPARENT INTUMESCENT COATINGS AND COMPOSITES INCORPORATING THE SAME**
FLEXIBLE, TRANSPARENTE, INTUMESZIERENDE BESCHICHTUNGEN UND VERBUNDWERKSTOFFE DAMIT
REVÊTEMENTS INTUMESCENTS TRANSPARENTS ET SOUPLES, ET COMPOSITES INCORPORANT CEUX-CI

(30) Priority: 25.07.2018 US 201862703156 P
(43) Date of publication of application: 02.06.2021
(73) Proprietor: E Ink Corporation, Billerica, Massachusetts 01821-4165 (US)
(72) Inventor: KANN, Yelena, Billerica, Massachusetts 01821-4165 (US); BLAINE, Thomas S., Billerica, Massachusetts 01821-4165 (US)
(74) Representative: Kilburn & Strode LLP
(86) International application number: PCT/US2019/042902
(87) International publication number: WO 2020/023432

(56) References cited:
- EP-A1- 2 979 839
- WO-A1-01/24755
- WO-A1-2015/040448
- KR-A- 20100 106 615
- KR-B1- 101 774 720
- US-A1- 2003 076 573
- US-A1- 2008 239 458
- US-A1- 2010 263 195
- US-A1- 2016 232 835

## Description

### BACKGROUND OF INVENTION

This invention relates to composites comprising intumescent materials and electro-optic materials.

Commercial intumescent coatings comprising a char-forming carbonaceous material ('carbonific'), a mineral acid catalyst, a blowing agent ('spumific'), and a binder resin may be found in paint formulations containing several pounds per gallon of intumescing components. Furthermore, the formulations are typically applied in thick layers, which results in costly coating.

A majority of intumescent fire coatings have been developed for aerospace and building/construction applications to fireproof steel, concrete, wood and other rigid substrates. Because transparency is not required for a majority of the applications, a number of current commercially available systems contain TiO₂, nano-clays, graphite, kaolin, and aluminosilicates. In order to comply with fireproofing standards, these rigid opaque coatings must be applied to the surface of the building materials. As a result, the coatings cannot be used for building materials that require flexibility and transparency, such as photovoltaic roofing tiles.

US 2010/0263195 A1 describes a method to form a pipe system which meets level II fire endurance standard according to IMO A 18/Res.753 fire testing protocol, for use in oil, gas, exploration, refining and petrochemical applications. In the pipe system, each pipe section comprises a plurality of layers, an inner layer in contact with the corrosive petroleum product comprising a thermoplastic material, a structural layer comprising a composite material, and an outer layer comprising a fire resistive material. The method comprises applying energy to join the corrosion resistant layers of the separate pipe sections together forming a j oint, applying an external wrap around the joint and at least a portion of the composite structural layers of the at least two pipe sections, and bonding the external wrap to the joint and the composite structural layers by chemical curing, thermal treatment, or combinations thereof. The fire resistive material may comprise an amine or amide compound.

WO 2015/040448 A1 describes an impact resistant, multipolar power cable comprising, a plurality of cores, each core comprising at least one conductive element and an electrical insulating layer around the at least one conductive element. The cores are stranded together so as to form an assembled element providing a plurality of interstitial zones. An expanded polymeric filler fills the interstitial zones between the plurality of cores. An expanded impact resistant layer extends around the expanded polymeric filler and comprises a polymer that differs from the expanded polymeric filler. The impact resistant layer may comprise a flame retardant material.

WO 01/24755 A1 describes an absorbent article (for example, a tampon) comprising a central absorbent member, an outer absorbent member, and a central rising member for urging the central absorbent member toward the body of the user when compressed laterally inward by the legs of the user. The article is able to achieve good center-fill performance when in use and maintain excellent body fit. Also disclosed is a lateral wicking barrier for inhibition of wicking from the central regions of the article to an outlying outer absorbent member. The combination of a wicking barrier isolating the central absorbent member from the longitudinal sides of the article and a central rising member urging the central absorbent member toward the body yields an article with excellent absorbency and leakage protection. The absorbent articles may include fire retardants.

EP 2 979 839 A1 (for an English version see US 2016/031196 A1) describes an extruded part having a substrate comprising at least one thermoplastic polymer, and a fire-retardant made of a fire-retardant material coating the substrate so that the external surface of the part exclusively consists of said fire-retardant material, wherein the fire-retardant layer adheres to the substrate, the fire-retardant material comprises a polyolefin and a non-halogenated fire-retardant compound, and the substrate comprises a mixture of a polyolefin and of at least one thermoplastic biopolymer and/or of at least one thermoplastic polymer, and an agent for compatibilization of the thermoplastic biopolymer and/or of the thermoplastic polymer with the polyolefin.

Thus, there is a need for improved transparent intumescent coatings that may be incorporated in flexible materials.

### SUMMARY OF THE INVENTION

The present invention provides a composite comprising a layer of an intumescent material and a layer of electro-optic material, in accordance with the appended claims.

These and other aspects of the present invention will be apparent in view of the following description.

### BRIEF DESCRIPTION OF THE FIGURES

The drawing Figures depict one or more implementations in accord with the present concepts, by way of example only, not by way of limitations. The drawings are not to scale. In the figures, like reference numerals refer to the same or similar elements.
Figure 1 is a perspective view, from above and to one side of an intumescent material and moisture barrier which can be used in composites of the present invention.
Figure 2 is a cross-section along axis I-I in Figure 1.
Figure 3 is a cross-section through a moisture barrier, intumescent layer and electro-optic layer which can be used in composites of the present invention.
Figure 4 is a cross-section through a composite of the present invention.
Figure 5 is a cross-section through a second composite of the present invention.
Figure 6A is a photograph of a torch flame applied to a sample of a composite having a structure similar to that of Figure 4.
Figure 6B is a photograph of the sample of Figure 6A ten minutes after the flame was removed.
Figure 7 is a photograph taken ten minutes after a flame was removed from a sample of a composite having a structure similar to that of Figure 5.
Figure 8 is a plot of the environmental stability data presented in Table 1 below.
Figure 9 is a chart of the performance of samples in Example 3 below after exposure to UV in a QUV UV tester.
Figures 10A and 10B are cross-sections through laminatable stacks comprising a layer of intumescent material and useful in producing composites of the invention.
Figure 11 is a chart of embrittlement test data for various samples made in Example 4 below.
Figure 12 is a plot of light transmission data for a sample of intumescent material and a flexible substrate in Example 4 below.

### DETAILED DESCRIPTION

In the following detailed description, numerous specific details are set forth by way of examples in order to provide a thorough understanding of the relevant teachings. However, it should be apparent to those skilled in the art that the present teachings may be practiced without such details.

Generally, the various embodiments of the present invention provide a fire-resistant composite that may be used in various devices requiring transparent top layers. The composite material includes a layer of an electro-optic material. The composite materials according to the various embodiments of the present invention are sufficiently transparent and flexible, such that they may be successfully integrated with color changing films, or other architectural electronic paper based products. This may be particularly advantageous for architectural product that contain flammable solvents, such as some electronic paper based products. Because the composites according to the present invention are light-transmissive, the composites may have little to no effect on the electro-optical performance of the final product. The term "light-transmissive" is used herein to mean that the layer thus designated transmits sufficient light to enable an observer, looking through that layer, to observe the appearance of the surface of an underlying layer(s).

The classification of fire-protective coatings is based on their desired performance, namely: (1) those that increase the fire resistance as defined by ASTM E119 for buildings or by ASTM E1529 for hydrocarbon fires and measured in terms of time, i.e., 1 h, 2 h, etc., and (2) those that reduce the flame spread of the combustible substrates measured by the flame spread index of ASTM E84. The fire resistant composites, as well as assemblies that include the composites, according to the various embodiments of the present invention preferably comply with ASTM E84 and have a rating of B or above, i.e. a Flame Spread Index determined by ASTM E84 of 75 or greater.

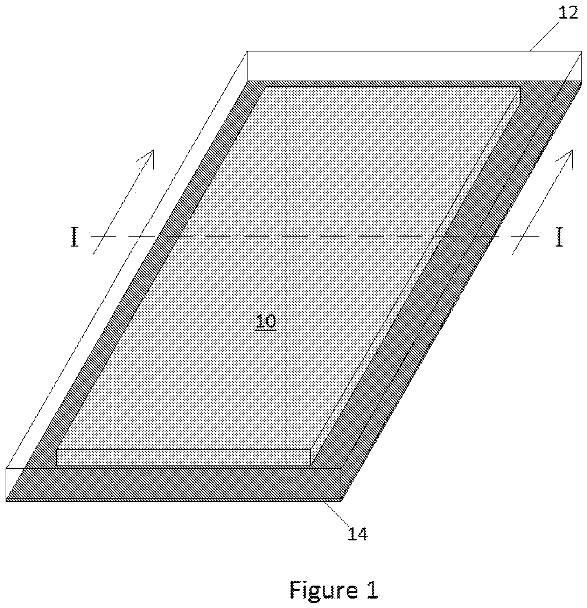

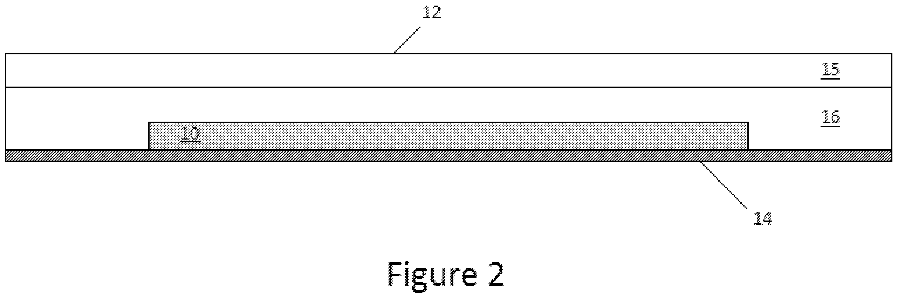

Referring now to Figures 1 and 2, a combination of a moisture barrier and an intumescent material, useful in composites of the invention, is illustrated. The combination includes a base sheet 14 preferably provided in the form of a removable release sheet that may be advantageous in certain lamination processes. The combination further comprises a layer of light-transmissive intumescent material 10 and a protective layer 12. The protective layer 12 comprises a light-transmissive barrier layer 15 and a light-transmissive adhesive layer 16. As previously noted, the protective layer 12 surrounds and encloses the layer of intumescent material 10 to prevent or inhibit the loss of moisture from the intumescent material 10.

The barrier layer 15 may be provided in the form of a flexible top substrate, and materials that may be used to form the top substrate include, but are not limited to, polymeric materials, such as polyethylene terephthalate, polyethylene naphthalate, polycarbonate, polyimides, cyclic olefin homopolymers or copolymers, and combinations thereof. The substrate is preferably made of a material that may be coated with one or more films to enhance the moisture barrier properties of the protective layer 12 or to incorporate other properties, such as a hard coating, an antiglare coating, or a UV-coating to prevent degradation of the underlying intumescent material. Examples of coating materials include, but are not limited to, organic and inorganic compounds, such as silica oxides, silica nitrides, aluminum oxides, and polymers, such as polyacrylics, and combinations thereof. Combinations of the listed materials may be provided in the form of alternating layers, e.g. alternating layers of polymer/Al₂O₃ or polymer/silica oxide or nitride. It is preferred that the barrier layer 15 exhibits a water vapor transmission rate (WVTR) of at most about 10⁻² g/m²/day, more preferably at most about 10⁻³ g/m²/day, at 60 °C and 100% RH to prevent or inhibit the embrittlement of the intumescent material.

The layer of adhesive material 16 is preferably made of an optically clear adhesive material, such as a pressure sensitive adhesive, a hot melt adhesive, reactive adhesives, or combinations thereof. The previously described coating materials, such as the UV-protective materials, may also be incorporated into the adhesive material or incorporated as another layer between the adhesive material and the layer of intumescent material. The adhesive material layer 16 is preferably applied in a manner, such that the intumescent material 10 is completely encased within the adhesive material layer 16 to further prevent or inhibit the escape of moisture from the intumescent material 10. The releasable sheet 14 may then be applied to form the bottom of the composite after the intumescent material 10 is encased in the adhesive layer 16.

Intumescence is a strategy in flame retardancy that involves the formation on heating of a swollen multicellular thermally stable char insulating the underlying material from the flame. The intumescent material used in the various embodiments of the present invention may comprise a char-forming carbonaceous material, a dehydration catalyst, and a blowing agent. Preferably, the dehydration catalyst and carbonaceous material form the char when heated, and the blowing agents cause the intumescent material to form a foamed structure when heated. Char-forming carbonaceous materials include, but are not limited to, carbon rich polyols, polyamide-6, nanocomposites of polyamide-6 and clay, triazine derivatives, isocyanurate derivatives, ethanolamine-aminotriazine oligomers, and combinations thereof. Dehydration catalysts that may be included in the intumescent material include, but are not limited to, mineral acid catalysts, such as phosphoric acid derivatives (e.g. ammonium polyphosphate, ammonium pyrophosphate, melamine phosphate, melamine pyrophosphate, melamine polyphosphate, chloroalkyl phosphates, chloroalkyl phosphonates, esters of organic phosphates or phosphonates), and combinations thereof. The blowing agents may include, but are not limited to, compounds containing an amine or amide, such as melamine, triazine derivatives, and combinations thereof. The intumescent material may further comprise a binder resin, such as melamine formaldehyde, urea formaldehyde, polyacrylates, polyurethanes, polyvinyls, ethylene-vinyl-acetates (EVAs), polyvinyl acetate (PVAc), epoxides, silicates, and combinations thereof. An example of an intumescent material that may be used in the various embodiment of the present invention is a mixture of FX100 resin and T50 catalyst (both manufactured by Flame Seal Products Inc. of Houston, TX).

The intumescent material preferably expands up to 50-100 times its original thickness. When activated, the intumescent material preferably forms an insulating char layer consisting of tiny air cells, which protects the underlying layers from further burning. To meet the fire test standards, the char foam layer should be stable for given periods of time at specified temperatures (e.g. 1or 2 hours). The intumescent process preferably starts at 200-250 °C.

The chemical reactions that occur when the intumescent material is exposed to heat may progress as follows:
1. the binder resin, if present, melts, facilitating chemical reactions in a fluid phase;
2. a dehydration catalyst decomposes to form an acid;
3. the acid reacts with carbon-rich polyols to form cross-linked acid esters;
4. the esters decompose to form a char matrix; and
5. the blowing agent releases gases that cause the matrix to expand and form a thick and compact cellular char foam.

Electro-optic displays made using composites of the present invention may provide composites or laminates in which the intumescent material is in close proximity to the electro-optic medium within the stack, which may be advantageous for electro-optic media containing flammable encapsulants.

The term "electro-optic", as applied to a material or a display, is used herein in its conventional meaning in the imaging art to refer to a material having first and second display states differing in at least one optical property, the material being changed from its first to its second display state by application of an electric field to the material. Although the optical property is typically color perceptible to the human eye, it may be another optical property, such as optical transmission, reflectance, luminescence or, in the case of displays intended for machine reading, pseudo-color in the sense of a change in reflectance of electromagnetic wavelengths outside the visible range. Electro-optic materials/displays may include various types of media, such as rotating bichromal members, encapsulated electrophoretic media, liquid crystal media, electrochromic media, electro-wetting media.

Numerous patents and applications assigned to or in the names of the Massachusetts Institute of Technology (MIT), E Ink Corporation, E Ink California, LLC and related companies describe various technologies used in encapsulated and microcell electrophoretic and other electro-optic media. Encapsulated electrophoretic media comprise numerous small capsules, each of which itself comprises an internal phase containing electrophoretically-mobile particles in a fluid medium, and a capsule wall surrounding the internal phase. Typically, the capsules are themselves held within a polymeric binder to form a coherent layer positioned between two electrodes. In a microcell electrophoretic display, the charged particles and the fluid are not encapsulated within microcapsules but instead are retained within a plurality of cavities formed within a carrier medium, typically a polymeric film. The technologies described in these patents and applications include:
(a) Electrophoretic particles, fluids and fluid additives; see for example U.S. Patents Nos. 7,002,728 and 7,679,814;
(b) Capsules, binders and encapsulation processes; see for example U.S. Patents Nos. 6,922,276; 6,866,760; and 7,411,719;
(c) Microcell structures, wall materials, and methods of forming microcells; see for example United States Patents Nos. 7,072,095 and 9,279,906;
(d) Methods for filling and sealing microcells; see for example United States Patents Nos. 7,144,942 and 7,715,088;
(e) Films and sub-assemblies containing electro-optic materials; see for example U.S. Patents Nos. 6,982,178 and 7,839,564;
(f) Backplanes, adhesive layers and other auxiliary layers and methods used in displays; see for example U.S. Patents Nos. 7,116,318 and 7,535,624;
(g) Color formation and color adjustment; see for example U.S. Patents Nos. 7,075,502 and 7,839,564;
(h) Methods for driving displays; see for example U.S. Patents Nos. 7,012,600 and 7,453,445;
(i) Applications of displays; see for example U.S. Patents Nos. 7,312,784 and 8,009,348; and
(j) Non-electrophoretic displays, as described in U.S. Patent No. 6,241,921 and U.S. Patent Application Publication No. 2015/0277160; and applications of encapsulation and microcell technology other than displays; see for example U.S. Patent Application Publications Nos. 2015/0005720 and 2016/0012710.

Other types of electro-optic media may also be used in the displays of the present invention.

An electro-optic display normally comprises a layer of electro-optic material and at least two other layers disposed on opposed sides of the electro-optic material, one of these two layers being an electrode layer. In most such displays both the layers are electrode layers, and one or both of the electrode layers are patterned to define the pixels of the display. For example, one electrode layer may be patterned into elongate row electrodes and the other into elongate column electrodes running at right angles to the row electrodes, the pixels being defined by the intersections of the row and column electrodes. Alternatively, and more commonly, one electrode layer has the form of a single continuous electrode and the other electrode layer is patterned into a matrix of pixel electrodes, each of which defines one pixel of the display.

The manufacture of a three-layer electro-optic display normally involves at least one lamination operation. For example, in several of the aforementioned MIT and E Ink patents and applications, there is described a process for manufacturing an encapsulated electrophoretic display in which an encapsulated electrophoretic medium comprising capsules in a binder is coated on to a flexible substrate comprising indiumtin-oxide (ITO) or a similar conductive coating (which acts as one electrode of the final display) on a plastic film, the capsules/binder coating being dried to form a coherent layer of the electrophoretic medium firmly adhered to the substrate. Separately, a backplane, containing the array of pixel electrodes and an appropriate arrangement of conductors to connect the pixel electrodes to drive circuitry, is prepared. To form the final display, the substrate having the capsule/binder layer thereon is laminated to the backplane using a lamination adhesive. In one preferred form of such a process, the backplane is itself flexible and is prepared by printing the pixel electrodes and conductors on a plastic film or other flexible substrate. The obvious lamination technique for mass production of displays by this process is roll lamination using a lamination adhesive. Similar manufacturing techniques can be used with other types of electro-optic displays. For example, a microcell electrophoretic medium or a rotating bichromal member medium may be laminated to a backplane in substantially the same manner as an encapsulated electrophoretic medium.

The aforementioned U.S. Patent No. 6,982,178 describes a method of assembling a solid electro-optic display (including an encapsulated electrophoretic display) which is well adapted for mass production. Essentially, this patent describes a so-called "front plane laminate" ("FPL") which comprises, in order, a light-transmissive electrically-conductive layer; a layer of a solid electro-optic medium in electrical contact with the electrically-conductive layer; an adhesive layer; and a release sheet. Typically, the light-transmissive electrically-conductive layer will be carried on a light-transmissive substrate, which is preferably flexible, in the sense that the substrate can be manually wrapped around a drum (say) 10 inches (254 mm) in diameter without permanent deformation. The substrate will typically be a polymeric film, and will normally have a thickness in the range of about 1 to about 25 mil (25 to 634 µm), preferably about 2 to about 10 mil (51 to 254 µm). The electrically-conductive layer is conveniently a thin metal or metal oxide layer of, for example, aluminum or ITO, or may be a conductive polymer. Poly(ethylene terephthalate) (PET) films coated with aluminum or ITO are available commercially, for example as "aluminized Mylar" ("Mylar" is a Registered Trade Mark) from E.I. du Pont de Nemours & Company, Wilmington DE, and such commercial materials may be used with good results in the front plane laminate.

Assembly of an electro-optic display using such a front plane laminate may be effected by removing the release sheet from the front plane laminate and contacting the adhesive layer with the backplane under conditions effective to cause the adhesive layer to adhere to the backplane, thereby securing the adhesive layer, layer of electro-optic medium and electrically-conductive layer to the backplane. This process is well-adapted to mass production since the front plane laminate may be mass produced, typically using roll-to-roll coating techniques, and then cut into pieces of any size needed for use with specific backplanes.

U.S. Patent No. 7,561,324 describes a so-called "double release sheet" which is essentially a simplified version of the front plane laminate of the aforementioned U.S. Patent No. 6,982,178. One form of the double release sheet comprises a layer of a solid electro-optic medium sandwiched between two adhesive layers, one or both of the adhesive layers being covered by a release sheet. Another form of the double release sheet comprises a layer of a solid electro-optic medium sandwiched between two release sheets. Both forms of the double release film are intended for use in a process generally similar to the process for assembling an electro-optic display from a front plane laminate already described, but involving two separate laminations; typically, in a first lamination the double release sheet is laminated to a front electrode to form a front sub-assembly, and then in a second lamination the front sub-assembly is laminated to a backplane to form the final display, although the order of these two laminations could be reversed if desired.

U. S. Patent No. 7,839,564 describes a so-called "inverted front plane laminate", which is a variant of the front plane laminate described in the aforementioned U.S. Patent No. 6,982,178. This inverted front plane laminate comprises, in order, at least one of a light-transmissive protective layer and a light-transmissive electrically-conductive layer; an adhesive layer; a layer of a solid electro-optic medium; and a release sheet. This inverted front plane laminate is used to form an electro-optic display having a layer of lamination adhesive between the electro-optic layer and the front electrode or front substrate; a second, typically thin layer of adhesive may or may not be present between the electro-optic layer and a backplane. Such electro-optic displays can combine good resolution with good low temperature performance.

The composites of the invention may be manufactured using an FPL.

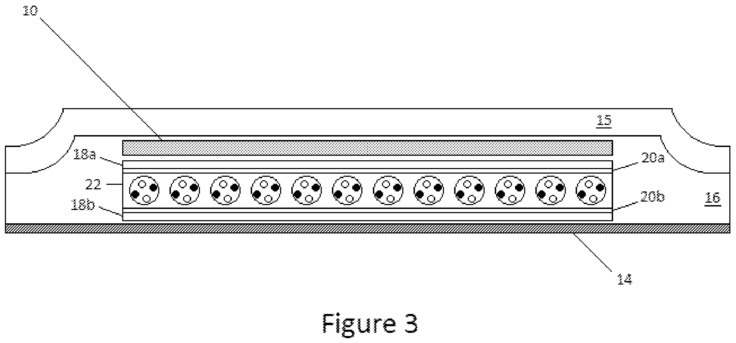

For example, Figure 3 is a schematic cross-section through an FPL useful in forming composites of the present invention. The FPL comprises a protective layer comprising a light-transmissive barrier layer 15 and an adhesive material layer 16. A layer of intumescent material 10 may be embedded within the layer of adhesive material 16.

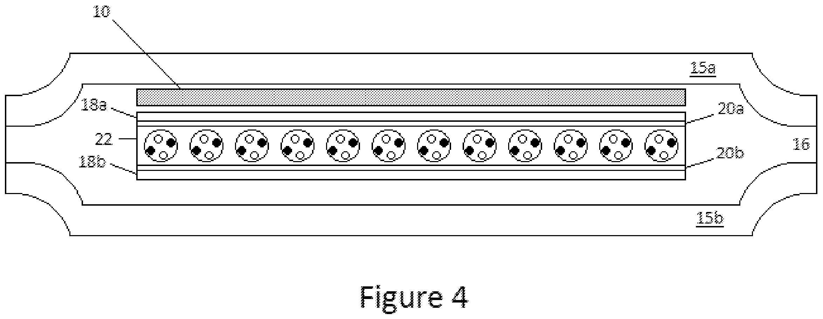

Figure 4 illustrates a composite of the present invention having, two barrier layers 15a, 15b with a single adhesive material layer 16 containing the embedded intumescent material 10 between the two barrier layers 15a, 15b. In order to inhibit or prevent the loss of moisture from the intumescent layer 10, the peripheral region of the protective layer includes a pinched edge seal 11.

An electro-optic layer is also embedded within the layer of adhesive material 16. The electro-optic layer comprises a layer of electrophoretic medium 22 having layers of light-transmissive conductive material 18a, 18b applied to opposing sides of the layer of electrophoretic medium 22. The layers of conductive material 18a, 18b serve as electrodes when connected to a power source (not shown) to apply an electric field across the thickness of the electrophoretic medium 22 causing the electrophoretic medium to switch optical states. Materials for the light-transmissive conductive material include, but are not limited to, indium tin oxide, PEDOT-PSS, metallic nanowires, carbon nanotubes, graphene, organic-metal-organic (OMO) electrodes, and combinations thereof. An optional conductive adhesive layer 20a, 20b may be applied between the layers of conductive material 18a, 18b and the electrophoretic medium 22.

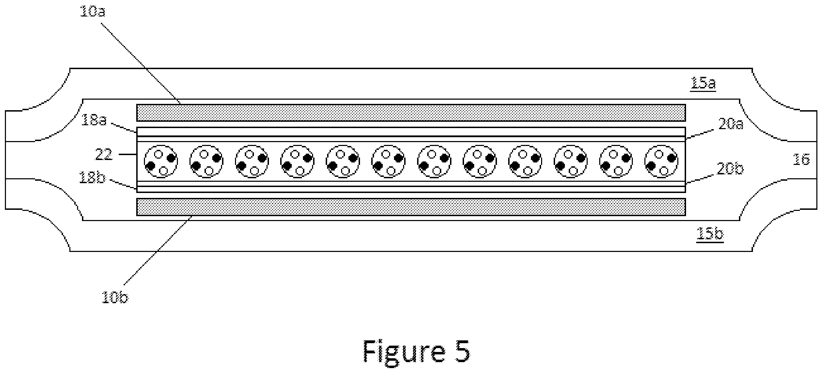

As previously explained, the electrophoretic medium may comprise encapsulated dispersions of electrophoretic pigment particles in a solvent or solvent mixture. The solvent or solvent mixture, as well as other components of the electro-optic medium (such as the adhesive material), may be highly flammable. Therefore, it is preferred that the intumescent material is positioned in proximity to the electro-optic medium and preferably on a side having a higher likelihood of being exposed to fire. For example, as illustrated in Figure 3, a release sheet 14 is applied to the bottom of the FPL. The release sheet 14 is removable to expose the underlying adhesive material 16, so that the FPL may be adhered to a surface. As a result, the barrier layer 15 will be exposed and in the event of a fire, the flames will attack the exposed barrier layer first. By positioning the intumescent layer 10 between barrier layer 15 and layer of electro-optic medium, the intumescent material 10 may be activated before the flame is able to burn the layer of electro-optic medium. For additional fire resistance or for composites having multiple exposed faces, such as a dual-sided display, additional layers of intumescent material may be incorporated into the composite, such as the embodiment illustrated in Figure 5 having intumescent layers 10a, 10b on either side of the layer of electro-optic medium.

The blend of the intumescent material, as well as the thickness of the layer, are selected to ensure an accurate coordination of melting, charring, crosslinking, and gas release for effective intumescence performance. The layer of intumescent material is preferably configured, such that during intumescence, the active foaming material migrates toward the inner flammable layers of the FPL and upon cooling and solidification, seals and isolates the flammable layers from the fire.

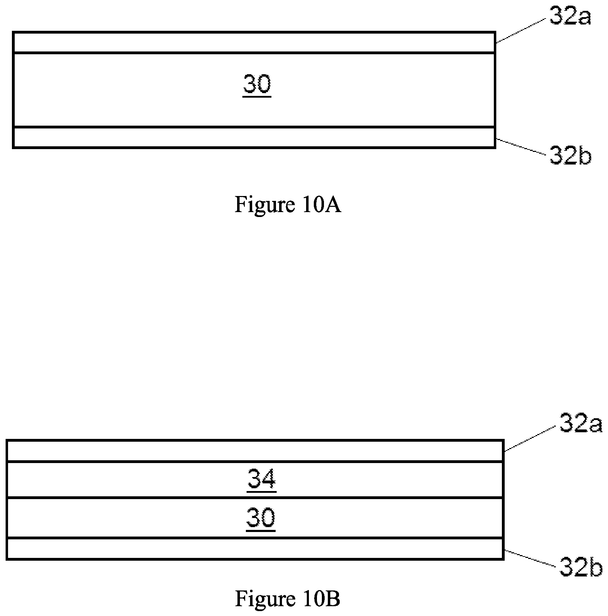

The composition of the intumescent material may be modified to improve its flexibility with the addition of one or more plasticizers. The additives for improving flexibility are preferably compatible and miscible in the binder resin of the intumescent material. Examples of flexibility additives include, but are not limited to Kemectant EB3 (supplied by Lankem Ltd., UK), glycerol, and ethylene glycol. The preferred plasticizers are glycerol and ethylene glycol. The intumescent coating may comprise 1 to 20 weight %, preferably 5 to 10 weight %, of plasticizer based on the weight of the coating. Blends of the intumescent material and plasticizer(s) may be incorporated into laminatable stacks. For example, referring to Figures 10A and 10B blends of intumescent material and plasticizer 30 may be coated with a coating die onto a continuous conveyor that is fed through one or more drying stages before being laminated between two release sheets 32a, 32b and optionally one or more layers of optically clear pressure sensitive adhesives 34. The thickness of the final dried layer of intumescent material may be 25 to 75 microns, more preferably 40 to 50 microns, and a coat weights of 50 to 150 g/m², more preferably 75 to 90 g/m².

### EXAMPLES

Examples are now given, though by way of illustration only, to show details of preferred composites of the present invention.

### Example 1

An intumescent material was prepared by mixing Flame Seal's FX100 binder and T-50 curing agent in a ratio of 4:1 by volume at 2500 rpm for 60 seconds in a speed mixer. The intumescent material was then coated onto a release sheet by bar coating a layer having a thicknesses of 0.003", drying the material, and then applying a second coating of the intumescent material having a thickness of 0.004" and again drying the coated release sheet.

A sample of electro-optic media was then prepared comprising a layer of electrophoretic media between two continuous layer of indium tin oxide. A urethane based optically clear adhesive was applied to one side of the electro-optic media and the intumescent material was laminated to the urethane adhesive followed by removal of the release sheet.

A protective sheet consisting of PET with a sputtered coating of silica oxide and a layer of pressure sensitive adhesive was then laminated to the intumescent layer, and a second protective sheet of the same composition was laminated to the electro-optic media resulting in a structure similar to the embodiment illustrated in Figure 4.

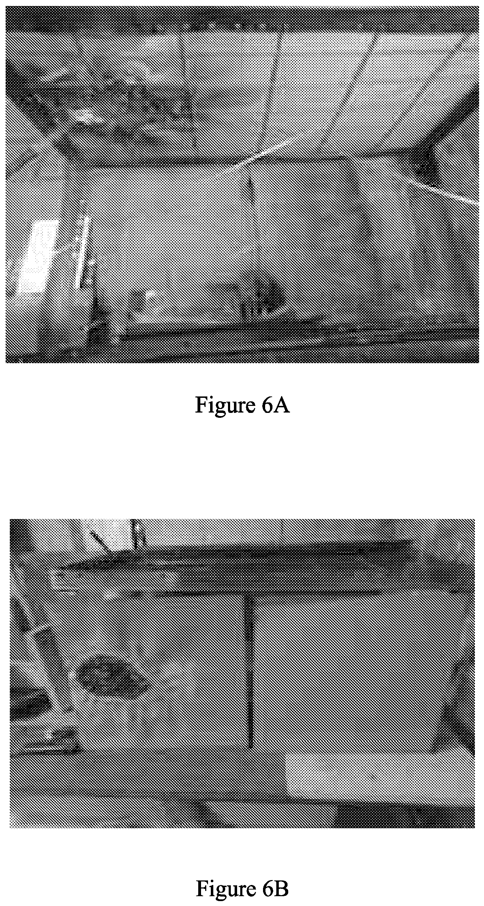

0.5" x 5" (13 mm x 127 mm) samples of the above-described composites were tested using the UL-94HB test method and 12"x12" (254mm x 254 mm)samples were submitted to Guardian Fire testing labs for a scaled down version of ASTM E-84 (referred to as "mini E-84") for investigating the flammability behavior of the samples. Similarly to the full scale ASTM E84 test standard, UL-94HB reports the calculated rate of fire spread and identifies the ability of the tested material to form ignitable debris, which is capable of spreading fire. Both tests confirmed that the intumescent fire protection was compliant with the above standards: burning rate was 57 mm/min (under 76mm/min to comply with UL94HB), and class A rating was achieved with mini E-84. The fire self-extinguished by forming a much expanded intumescent charring, and no fire drippings were produced. The results may be observed in Figures 6A and 6B. Figure 6A is a photograph of the application of fire using a torch to a sample, and Figure 6B is a photograph of the sample 10 minutes after the torch had been removed.

### Example 2

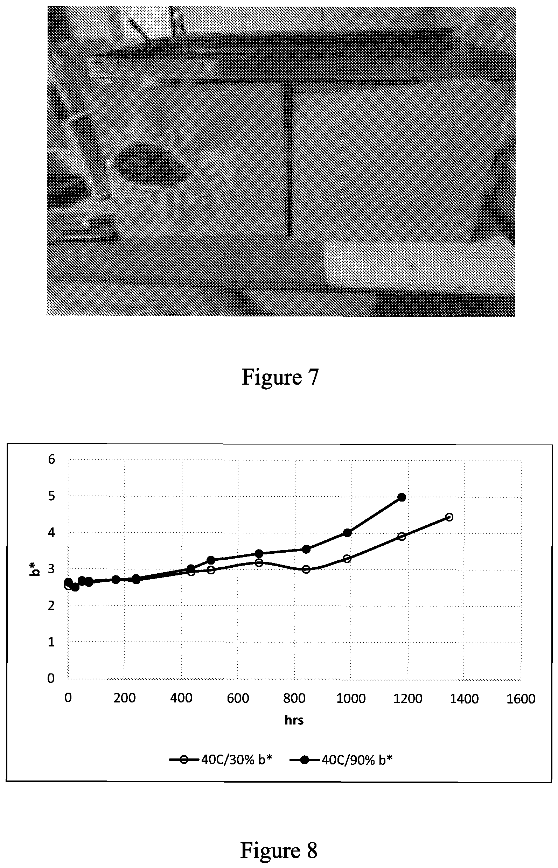

Sample made according to Example 1 were made, except that the intumescent material was laminated to both sides of the electro-optic media prior to application of the two protective sheets. The resulting samples had a structure similar to the embodiment illustrated in Figure 5. Identical fire performance as the sample in Example 1 was obtained. Figure 7 is a photograph taken ten minutes after the removal of a torch demonstrating that the sample was self-extinguishing and produced a well-contained fire spread.

### Example 3

Samples were prepared by laminating a layer of intumescent material (Fx100/T50, 4: 1 volume) sealed between protective sheet layers consisting of 25 µm thick PET based film sputtered with SiOx (WVTR <0.15 g/m²/day at 60C/90% RH) and 25 µm thick PSA (WVTR <35 g/m²/day at 38C/90% RH). The samples included a pinch seal around the periphery of the samples.

Environmental stability of the samples was tested by exposing the samples to 1177 hrs of an atmosphere of 40C/30% RH and an atmosphere of 40C/90% RH. The b* value was observed as the most changeable color coordinate. Δb* after 1177 hrs of exposure to 40C/30% RH was 1.38 and 2.35 after 1177 hrs of exposure at 40C/90% RH. The results are provided in Table 1 and Figure 8. No embrittlement of the intumescent layer could be observed.

**Table 1:**

| | **40C/30%** | | **40C/90%** | |
|---|---|---|---|---|
| **hrs** | **b*** | **DE*** | **b*** | **DE*** |
| **0** | 2.54 | | 2.64 | |
| **24** | 2.50 | 0.12 | 2.51 | 0.14 |
| **48** | 2.69 | 0.24 | 2.66 | 0.10 |
| **72** | 2.63 | 0.12 | 2.67 | 0.16 |
| **168** | 2.72 | 0.27 | 2.72 | 0.31 |
| **240** | 2.71 | 0.20 | 2.75 | 0.35 |
| **434** | 2.93 | 0.44 | 3.02 | 0.49 |
| **504** | 2.98 | 0.47 | 3.25 | 0.74 |
| **673** | 3.19 | 0.73 | 3.44 | 0.86 |
| **841** | 3.01 | 1.09 | 3.56 | 1.25 |
| **985** | 3.31 | 1.38 | 4.02 | 1.95 |
| **1177** | 3.92 | 2.03 | 4.99 | 2.93 |
| **1345** | 4.92 | 2.54 | | |

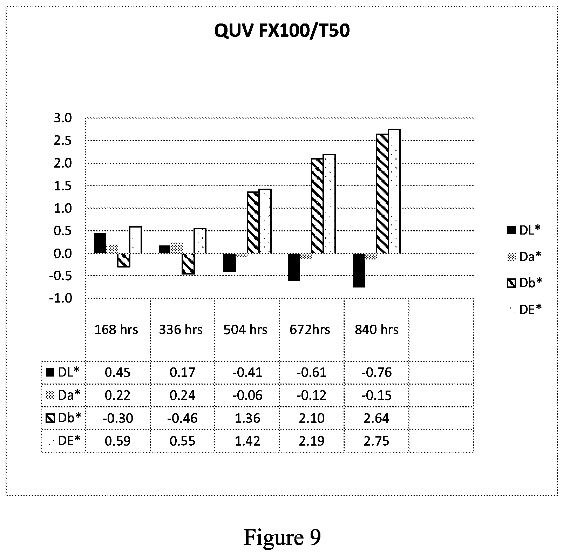

The effects of UV exposure were also tested by placing the samples in a QUV UV tester, manufactured by Q-Lab Corporation (fluorescent light source, 20000 Lux, 0.5 W/m² @340nm). The results provided in Figure 9 demonstrate that the color stability was acceptable until 840 hrs.

### Example 4

The effect of adding plasticizer to blends of intumescent material was tested by coating a layer of intumescent material with and without plasticizer to a flexible PET substrate and wrapping the coated substrate around a cylinder having an approximately two inch diameter. The flexible substrate had a thickness of 125 microns and the layer of intumescent material was approximately 50 microns. The intumescent material was a 4:1 formulation of FX100/T50. The control sample contained no plasticizer, the intumescent material of a first test sample contained 5% by weight glycerol, and the intumescent material of a second test sample contained 5% by weight Kemectant EB3.

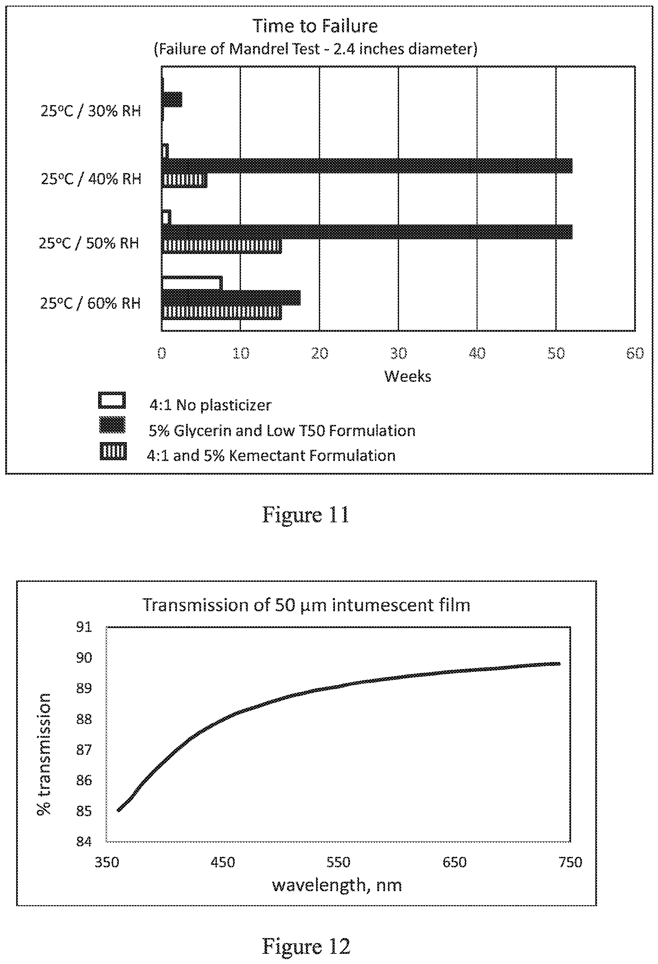

The samples were stored at conditions ranging from 30% to 60% RH at 25 C for various periods of time. Intermittently during storage, the samples were wrapped around a mandrel, and the appearance of any cracks or embrittlement were noted. The results are provided in Figure 11.

The control sample containing the non-modified 4:1 FX100/T50 formulation of intumescent developed cracking after 1 day at 25C/30%. After 18+ days, no embrittlement was observed in the sample containing the 5% glycerol modified intumescent material. At 25C/40% RH, the control sample again failed after 1 day of storage, the Kemectant EB3 modified sample was flexible after 40+ days and the glycerol modified sample was flexible after 125+ days.

To determine the optical characteristics of the modified intumescent coating, three films were prepared by coating a layer approximately 50 micron thick of a 4:1 formulation of FX100/T50 and 5% by weight glycerol onto a release sheet. After allowing the coated layers to dry, each film was removed from the release sheet and the samples placed into a Konica Minolta 3700 spectrophotometer, and the results are provided in Table 2 below and Figure 12.

**Table 2:**

| **Sample** | **Haze (D1003-97)(C)** | **L*** | **a*** | **b*** |
|---|---|---|---|---|
| 1 | 15.98 | 95.59 | -0.01 | 0.77 |
| 2 | 14.92 | 95.77 | -0.01 | 1.32 |
| 3 | 15.12 | 95.27 | -0.02 | 1.29 |

As seen in the graph of Figure 12, the materials incorporated in the composites made according to the various embodiments of the present invention transmit at least about 85 to 90% of visible light.

## Claims

1. A composite comprising a layer (10) of an intumescent material and a first moisture barrier (15a) in contact with at least one surface of the layer of intumescent material (10), the intumescent material comprising an amine or amide containing compound,
the composite being **characterized in that** it further comprises:
a second moisture barrier (15b), wherein the layer (10) of intumescent material is embedded within a layer (16) of adhesive material and is disposed between the first (15a) and second (15b) moisture barriers, the first moisture barrier (15a) being light-transmissive, and
a layer (22) of electro-optic material embedded within the layer (16) of adhesive material and disposed between the layer (10) of intumescent material and the second moisture barrier (15b),
and wherein a peripheral region of the moisture barriers (15a, 15b) and the layer of adhesive material (16) comprise a pinched edge seal,
and wherein the composite is further **characterized in that** the layer (10) of intumescent material is light-transmissive.

2. The composite of claim 1, wherein the first moisture barrier (15a) comprises a material selected from the group consisting of polyethylene terephthalate, polyethylene naphthalate, polycarbonate, polyimides, cyclic olefin homopolymers or copolymers, and combinations thereof.

3. The composite of claim 1, wherein the layer (16) of adhesive comprises an optically clear adhesive material.

4. The composite of claim 1, wherein the moisture barriers (15a, 15b) have a WVTR less than or equal to 0.01 g/m²/day at 60 °C and 100% RH.

5. The composite of claim 1, wherein the intumescent material further comprises a char-forming carbonaceous material, a dehydration catalyst, and a blowing agent.

6. The composite of claim 5, wherein the char-forming carbonaceous material is selected from the group consisting of polyols, polyamide-6, nanocomposites of polyamide-6 and clay, triazine derivatives, isocyanurate derivatives, ethanolamine-aminotriazine oligomers, and combinations thereof.

7. The composite of claim 5, wherein the dehydration catalyst is selected from the group consisting of ammonium polyphosphate, ammonium pyrophosphate, melamine phosphate, melamine pyrophosphate, melamine polyphosphate, chloroalkyl phosphates, chloroalkyl phosphonates, esters of organic phosphates or phosphonates, and combinations thereof.

8. The composite of claim 5, wherein the blowing agent is selected from the group consisting of melamine, triazine derivatives, and combinations thereof.

9. The composite of claim 5, wherein the intumescent material further comprises a binder resin and/or a plasticizer.

10. The composite of claim 9, wherein the binder resin is selected from the group consisting of melamine formaldehyde, urea formaldehyde, polyacrylates, polyurethanes, polyvinyls, EVAs, PVAc, epoxides, silicates, and combinations thereof, and/or the plasticizer comprises a material selected from the group consisting of glycerol and ethylene glycol.

11. The composite of claim 1, wherein the layer of electro-optic material comprises an encapsulated dispersion of electrophoretic particles.

## Patentansprüche

1. Verbundwerkstoff, umfassend eine Schicht (10) aus einem intumeszierenden Material und eine erste Feuchtigkeitsbarriere (15a) in Kontakt mit mindestens einer Oberfläche der Schicht aus intumeszierendem Material (10), wobei das intumeszierende Material eine amin- oder amidgruppenhaltige Verbindung umfasst,
wobei der Verbundwerkstoff **dadurch gekennzeichnet ist, dass** er ferner Folgendes umfasst:
eine zweite Feuchtigkeitsbarriere (15b), wobei die Schicht (10) aus intumeszierendem Material in einer Schicht (16) aus Klebstoff eingebettet ist und zwischen der ersten Feuchtigkeitsbarriere (15a) und der zweiten Feuchtigkeitsbarriere (15b) angeordnet ist, wobei die erste Feuchtigkeitsbarriere (15a) lichtdurchlässig ist, und
eine Schicht (22) aus elektrooptischem Material, die in der Schicht (16) aus Klebstoff eingebettet ist und zwischen der Schicht (10) aus intumeszierendem Material und der zweiten Feuchtigkeitsbarriere (15b) angeordnet ist,
und wobei ein peripherer Bereich der Feuchtigkeitsbarrieren (15a, 15b) und die Schicht aus Klebstoff (16) eine Quetschkantenversiegelung umfasst,
und wobei der Verbundwerkstoff ferner **dadurch gekennzeichnet ist, dass** die Schicht (10) aus intumeszierendem Material lichtdurchlässig ist.

2. Verbundwerkstoff nach Anspruch 1, wobei die erste Feuchtigkeitsbarriere (15a) ein Material aus der Gruppe bestehend aus Polyethylenterephthalat, Polyethylennaphthalat, Polycarbonat, Polyimiden, Cycloolefin-Homopolymeren oder -Copolymeren und Kombinationen davon umfasst.

3. Verbundwerkstoff nach Anspruch 1, wobei die Schicht (16) aus Klebstoff einen optisch klaren Klebstoff umfasst.

4. Verbund nach Anspruch 1, wobei die Feuchtigkeitsbarrieren (15a, 15b) eine WVTR kleiner oder gleich 0,01 g/m²/Tag bei 60 °C und 100 % RF aufweisen.

5. Verbundwerkstoff nach Anspruch 1, wobei das intumeszierende Material ferner ein kohlebildendes kohlenstoffhaltiges Material, einen Dehydratisierungskatalysator und ein Treibmittel umfasst.

6. Verbundwerkstoff nach Anspruch 5, wobei das kohlebildende kohlenstoffhaltige Material aus der Gruppe bestehend aus Polyolen, Polyamids-6, Nanoverbundwerkstoffen aus Polyamid-6 und Ton, Triazinderivaten, Isocyanuratderivaten, Ethanolamin-Aminotriazin-Oligomeren und Kombinationen davon ausgewählt ist.

7. Verbundwerkstoff nach Anspruch 5, wobei der Dehydratisierungskatalysator aus der Gruppe bestehend aus Ammoniumpolyphosphat, Ammoniumpyrophosphat, Melaminphosphat, Melaminpyrophosphat, Melaminpolyphosphat, Chloralkylphosphaten, Chloralkylphosphonaten, Estern von organischen Phosphaten oder Phosphonaten und Kombinationen davon ausgewählt ist.

8. Verbundwerkstoff nach Anspruch 5, wobei das Treibmittel aus der Gruppe bestehend aus Melamin, Triazinderivaten und Kombinationen davon ausgewählt ist.

9. Verbundwerkstoff nach Anspruch 5, wobei das intumeszierende Material ferner ein Bindemittelharz und/oder einen Weichmacher umfasst.

10. Verbundwerkstoff nach Anspruch 9, wobei das Bindemittelharz aus der Gruppe bestehend aus MelaminFormaldehyd, Harnstoff-Formaldehyd, Polyacrylaten, Polyurethanen, Polyvinylverbindungen, EVAs, PVAc, Epoxiden, Silicaten und Kombinationen davon ausgewählt ist und/oder der Weichmacher ein Material umfasst, das aus der Gruppe bestehend aus Glycerin und Ethylenglykol ausgewählt ist.

11. Verbundwerkstoff nach Anspruch 1, wobei die Schicht aus elektrooptischem Material eine verkapselte Dispersion von elektrophoretischen Partikeln umfasst.

## Revendications

1. Composite comprenant une couche (10) d'un matériau intumescent et une première barrière à l'humidité (15a) en contact avec au moins une surface de la couche de matériau intumescent (10), le matériau intumescent comprenant un composé contenant une amine ou un amide,
le composite étant **caractérisé en ce qu'**il comprend en outre :
une deuxième barrière à l'humidité (15b), dans lequel la couche (10) de matériau intumescent est incorporée dans une couche (16) de matériau adhésif et est disposée entre les première (15a) et deuxième (15b) barrières à l'humidité, la première barrière à l'humidité (15a) transmettant la lumière, et
une couche (22) de matériau électro-optique incorporée dans la couche (16) de matériau adhésif et disposée entre la couche (10) de matériau intumescent et la deuxième barrière à l'humidité (15b),
et dans lequel une région périphérique des barrières à l'humidité (15a, 15b) et la couche de matériau adhésif (16) comprennent un joint d'arête pincé,
et le composite étant en outre **caractérisé en ce que** la couche (10) de matériau intumescent transmet la lumière.

2. Composite selon la revendication 1, dans lequel la première barrière à l'humidité (15a) comprend un matériau sélectionné dans le groupe constitué par un poly(téréphtalate d'éthylène), un poly(naphtalate d'éthylène), un polycarbonate, des polyimides, des homopolymères ou copolymères d'oléfine cyclique et des combinaisons correspondantes.

3. Composite selon la revendication 1, dans lequel la couche (16) d'adhésif comprend un matériau adhésif optiquement transparent.

4. Composite selon la revendication 1, dans lequel les barrières à l'humidité (15a, 15b) ont un WVTR inférieur ou égal à 0,01 g/m²/jour à 60 °C et 100 % RH.

5. Composite selon la revendication 1, dans lequel le matériau intumescent comprend en outre un matériau carboné formant du charbon, un catalyseur de déshydratation et un agent de gonflement.

6. Composite selon la revendication 5, dans lequel le matériau carboné formant du charbon est sélectionné dans le groupe constitué par des polyols, un polyamide-6, des nanocomposites de polyamide-6 et d'argile, des dérivés de triazine, des dérivés d'isocyanurate, des oligomères d'éthanolamine-aminotriazine et des combinaisons correspondantes.

7. Composite selon la revendication 5, dans lequel le catalyseur de déshydratation est sélectionné dans le groupe constitué par un polyphosphate d'ammonium, un pyrophosphate d'ammonium, un phosphate de mélamine, un pyrophosphate de mélamine, un polyphosphate de mélamine, des phosphates de chloroalkyle, des phosphonates de chloroalkyle, des esters de phosphates ou de phosphonates organiques et des combinaisons correspondantes.

8. Composite selon la revendication 5, dans lequel l'agent de gonflement est sélectionné dans le groupe constitué par la mélamine, des dérivés de triazine et des combinaisons correspondantes.

9. Composite selon la revendication 5, dans lequel le matériau intumescent comprend en outre une résine liante et/ou un plastifiant.

10. Composite selon la revendication 9, dans lequel la résine liante est sélectionnée dans le groupe constitué par un mélamine formaldéhyde, un urée formaldéhyde, des polyacrylates, des polyuréthanes, des polyvinyles, des EVA, un PVAc, des époxydes, des silicates et des combinaisons correspondantes et/ou le plastifiant comprend un matériau choisi dans le groupe constitué par le glycérol et l'éthylène glycol.

11. Composite selon la revendication 1, dans lequel la couche de matériau électro-optique comprend une dispersion encapsulée de particules électrophorétiques.
